(19) Europäisches Patentamt / European Patent Office / Office européen des brevets

(11) **EP 1 476 959 B1**

(12) **EUROPEAN PATENT SPECIFICATION**

(45) Date of publication and mention
of the grant of the patent:
**29.10.2008 Bulletin 2008/44**

(51) Int Cl.:
*H04B 7/06* (2006.01)          *H04B 7/08* (2006.01)

(21) Application number: **03705589.4**

(22) Date of filing: **10.02.2003**

(86) International application number:
**PCT/SE2003/000217**

(87) International publication number:
**WO 2004/056012 (01.07.2004 Gazette 2004/27)**

(54) **METHOD AT MULTIPLE ANTENNAS**

VERFAHREN AN MEHREREN ANTENNEN

PROCEDE CONCERNANT DES ANTENNES MULTIPLES

(84) Designated Contracting States:
**AT BE BG CH CY CZ DE DK EE ES FI FR GB GR HU IE IT LI LU MC NL PT SE SI SK TR**
Designated Extension States:
**LT LV**

(30) Priority: **13.02.2002 SE 0200413**

(43) Date of publication of application:
**17.11.2004 Bulletin 2004/47**

(73) Proprietor: **TELIASONERA AB**
**106 63 Stockholm (SE)**

(72) Inventor: **OHLSSON, Bo**
**S-136 53 Haninge (SE)**

(74) Representative: **Hopfgarten, Nils**
**Groth & Co.KB**
**P.O. Box 6107**
**102 32 Stockholm (SE)**

(56) References cited:
EP-A1- 1 189 364          WO-A1-00/79702
WO-A1-99/39454          SE-C2- 516 105
US-A- 6 167 039

• SAWAHASHI M ET AL: 'Experiments on adaptive antenna array diversity transceiver for base station application in W-CDMA mobile radio' IEEE ANTENNAS AND PROPAGATION SOCIETY INTERNATIONAL SYMPOSIUM vol. 2, July 2000, pages 578 - 582, XP002958457

## Description

### Technical field

The present invention relates to the field of radio signal transmission with multiple antennas. Particularly is related to systems to achieve good transmission at base stations and mobile stations within mobile communication.

### Prior art

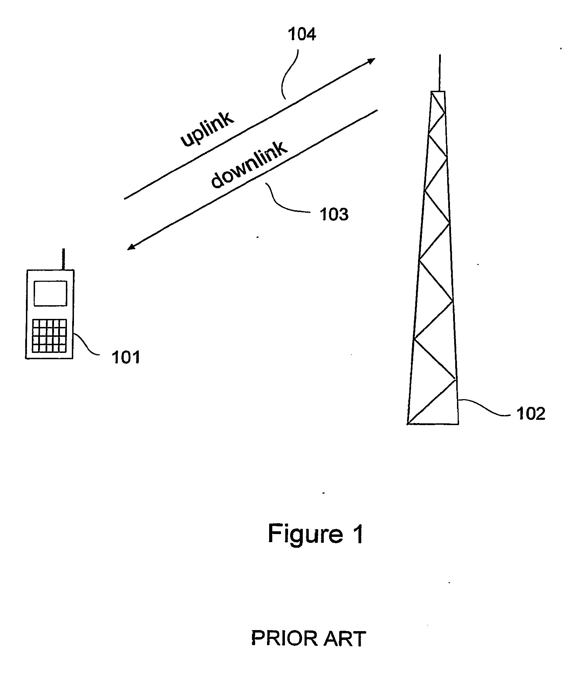

In a digital cellular radio communication system, radio signals are used which are digitally modulated to transmit information between base stations and mobile stations. The base station 102 transmits downlink signals 103 to the mobile station 101 and receives uplink signals 104 transmitted from the mobile stations 101, see Figure 1. A common problem which occurs in digital cellular radio communication systems is loss of information in the uplink and downlink signals as a result of signal dispersion and interference which may occur in the radio transmission channel.

Regarding multipath propagation, there are two basic spread effects: Angle spread and time spread, which result in fading. When the used wavelength between a mobile station and a base station is relatively short, fading will occur by interaction between the spread parts of the transmitted signal, for instance echoes, which arrive at/to the receiver at about the same time. When this occurs, the signals are added either destructively or constructively. If there are a large number of echoes, the pattern of destructive and constructive addition are created according to the Rayleigh distribution, so this effect is also called "Rayleigh fading".

Certain points in the fading pattern, where destructive addition results in "fading dips", result in a relatively low carrier-to-noise (C/N) ratio characteristic of the received signal and which result in error in the signals which are transmitted between the communication equipment.

In order to reduce these errors, technologies have been developed to optimize the reception for a communication equipment which is using group antennas. By varying the weights of the signals which have been detected by each of the individual antennas, or antenna elements, it will be possible to vary the antenna pattern in order to better detect signals from a specific direction, or to create conditions for a non-destructive combination of signals from different signal paths. These technologies adjust the weights of the signals from the group antennas in order to combine signals from a plurality of antennas and will have great gain in the received signal, either as antenna amplification, in free space, or in form of diversity gain in multipath propagation, with high "angular spread".

At transmission the method to transmit with an adaptive base station antenna, consisting of a plurality of antenna elements, will function well if there is no high spread, "angular spread", in the radio environment. That is, by forming a narrow lobe at transmission towards the wanted mobile station (MS), the signal strength is increased at the same time as interfering signals in other directions towards other mobile stations (in other directions) are suppressed. It will be relatively successful to, on average, control the antenna so that it transmits towards MS even when it moves. However, it is a big problem to calibrate all signal paths to the different antenna elements so that attenuation and above all phase displacement will be equal. A large part of the cost consists of just this calibration system. At the same time all antenna elements normally must be located close to each other with a mutual distance of about 0,5 wavelength from each other, which can make the adaptive antenna rather cumbersome and difficult to place.

At transmission, the method to transmit with adaptive base station antenna, consisting of a plurality of antenna elements, functions poorly if there is high spread, "angular spread", in the radio environment, as for instance in certain micro cells or large indoor environments. That is, they provide no gain at all, neither in SNR (Signal to Noise Ratio) or SIR (Signal to Interference Ratio).

In the patent document EP 0 807 989 a method is described to determine antenna weights to transmitters which are using group antennas. A control unit calculates a weight vector for the transmitter. Initially a value is calculated which represents "the amplitude of a signal which would be obtained at the receiver with the weight vector (w) at the transmitter and maximum ratio combining of the signals at the receiver".

In patent document US 6,173,014 a method is described which is using "interference rejection combining" in a receiver in combination with "interference rejection beamforming" in a transmitter (see column 5 line 33 - column 6, line 17).

WO 9939454 A1 discloses a base station having two antennas for diversity reception and transmission. At reception, the base station computes for each antenna an amplitude and phase value. The same amplitude and phase values are used at transmission.

US 6 167 039 describes a mobile station which uses plural antennas to suppress interference. At reception, the mobile station computes weights in each receive antenna branch.

The article "Experiments on Adaptive Antenna Array Diversity Transceiver for Base Station Application in W-CDMA Mobile Radio", M. Sawahashi et. al., IEEE Antennas and Propagation Society International Symposium, vol. 2, July 2000, pages 578-582, ISBN 0-7803-6369-8, presents a configuration including a pilot symbol-assisted (PSA) adaptive antenna array diversity (AAAD) receiver/transmitter for base station applications in W-CDMA mobile radio. The receiver antenna weights are adaptively controlled by minimizing the generated mean squared error (MSE) after Rake combining. Transmitter antenna weights are generated by modifying the generated receiver antenna weight.

WO 0079702 A1 discloses a radio equipment separating a signal of a specific terminal from signals from adaptive array antennas based on a reception weight vector calculated by a reception weight vector calculator.

SE 516 105 C2 (WO 0077951) describes a method for controlling the radiation pattern of an antenna comprising helically configured radiating elements adapted for receiving or receiving and transmitting radio frequency signals. At least one property of one received signal from one of said radiation elements is measured, and the parameter phase and/or amplitude for received signals and/or signals to be transmitted for one radiating elements is controlled as a response to the measured property of the received signal.

## Summary of the invention

The invention relates to a method to utilize multiple base station antennas in micro cell or indoor environment to direct the transmitted power optimally towards broadband terminals which have diversity reception with two antennas, for instance UMTS, EGPRS (GPRS), W-LAN.

The present invention is defined by claims 1 and 5, respectively. Advantageous embodiments emerge from the dependent claims.

The method is based on combining the signals from the multiple base station antennas to provide best signal-to-noise ratio at reception, also at transmission to each mobile station (MS). What is new about it, includes to use the same (momentary) complex MRC-coefficients to weight the signals to the multiple antennas, the same antennas as for reception, which are used for transmission from base station (BS) to mobile station (MS). This in itself provides a transmission towards mobile station (MS) which on average transmits in correct direction, or directions, also in multipath propagation. However, it will turn out that this, due to that transmission is made on a different frequency than what is used for reception, duplex frequency, will not provide any gain if the mobile stations have only one (1) receiver antenna, that is, the gain is zero if the angular spread is large. In combination with diversity reception with Optimum Combining from two (2) antennas at MS, the gain, however, can be high, which has been proved by simulations. With 8 BS antennas and 2 MS antennas the average gain will be 9 dB in SIR (Signal Interference Ratio) independent of what the environment looks like with regard to "angular spread" and how much the antennas are separated. By the method it actually will be possible to move the base station antennas from each other just arbitrarily, which will facilitate the placing/location, without the need to calibrate the phase, which is one of the biggest problems with adaptive group antennas.

## Brief description of the drawings

Figure 1 shows schematically uplink respective downlink according to prior art.
Figure 2 is an arrow diagram over a system according to one embodiment of the invention.
Figure 3 shows schematically a weight unit according to one embodiment of the invention.
Figure 4A and B are flow charts over different aspects of the method according to different embodiments of the invention.
Figure 4A:

A =     Measure received noise effect/interference effect.
B =     Extract for each antenna element voltage its phase position/displacement $\varphi_i$.
C =     Extract for each antenna element voltage $V_i$ its amplitude $A_i$.
D =     Create $\Sigma(A_i)^2$

E =     Determine k so that $\dfrac{1}{k^2} \times \sum (A_i)^2 = N$

Where N = The number of elements.
F =     Create $W_i = A_i/k$

Figure 4B:

G =     (reception combination)
H =     Create $V_{MRC} + \Sigma W_i \times Vi \times e^{-j\varphi i}$

I =     Let $V_{MRC}$ constitute received voltage.

J =     (transmission combination)

K =     Let B be the signal that shall be transmitted.

L =     Create for each antenna element i a voltage $U_i = B \times W_i \times e^{-j\varphi i}$

M =     Feed respective antenna element i with $U_i$.

## Description of preferred embodiments

At combination of the signals from the multiple base station antennas it will be possible to get a better signal-to-noise-ratio at reception. In multipath propagation is for optimization of signal-to-noise-ratio (SNR) Maximum Ratio Combining (MRC) used, whereas for optimization of the signal-to-interference-ratio (SIR) Optimum Combining (OC), also called Interference Rejection Combining (IRC), is used. Notice that for Universal Mobile Telecommunications Systems (UMTS) these two methods will be one method called MRC, because also interferences look as noise after "despreading" in the receiver. These methods can be used for reception in BS for both GSM/GPRS/EDGE, UMTS and W-LAN.

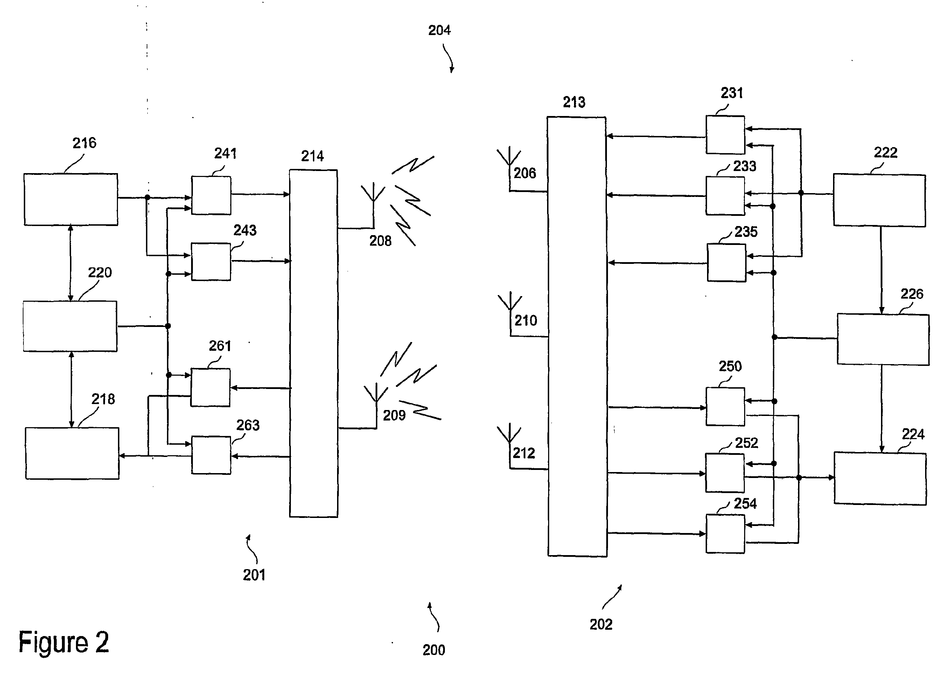

In Figure 2 a radio communication system according to one embodiment of the invention is described. The system includes a mobile communication device 201 and a stationary communication device 202 which communicates over a communication link 204. The communication device 201 can be for instance a mobile station, and the communication device 202 can be for instance a base station. The communication link 204 is a radio frequency wireless link, which can be subject to multipath propagation. In a cellular mobile communication system with a plurality of stationary communication devices, which each communicates with a plurality of mobile communication devices, these are subject to disturbances, interference. That is, they are interfered by signals which are transmitted to the other mobile communication devices. The present invention is among other things a way to reduce the influence of this interference, especially in environments where the angular spread is high, for instance micro cells and indoor environments.

The communication device 201 includes a transmitter 216, a receiver 218 and a control unit 220. The transmitter 216 and the receiver 218 are connected to antennas 208 respective 209 via a duplex unit 214 and weight units 241, 243, 261 and 263. The communication device 202 includes a transmitter 222, a receiver 224 and a control unit 226. The transmitter 222 and the receiver 224 are connected to a plurality of antennas 206 - 212, via a duplex unit 213 and weight units 231, 233, 235 and 250, 252, 254. In the figure are, for the sake of clarity, two antennas shown at one side, that is, for communication device 201, and three antennas for communication device 202. In other embodiments the number of antennas might very well be another, for instance for the communication device 202 eight.

The duplex circuit 213 can be implemented by means of any suitable duplex device, a switch circuit, a filter or the like. The duplex circuit 213 connects the antennas to the transmitter and the receiver to provide full or half duplex operation. Corresponding applies to communication device 201 for its duplex unit 214.

The weight units are divided into two groups, weight units at transmission respective weight units at reception. For communication device 202, the weight units are constituted by 231, 233 and 235 for transmission. The weight units 231, 233 and 235 are connected to the transmitter and the control unit. At transmission, the transmitted signal for antenna 206 is weighted by the weight circuit 231. The signal to antenna 210 is weighted by the weight circuit 233, and the signal to antenna 212 is weighted by the weight circuit 235.

At reception in communication device 202, received signal from antenna 206 is weighted by the weight circuit 250. Received signal from antenna 210 is weighted by weight circuit 252 and input signal from antenna 212 is weighted by weight circuit 254.

For communication device 201 the signal from the transmitter to antenna 208 is weighted in weight unit 241, and the signal to antenna 209 is weighted in weight unit 243. At reception in communication device 201, received signal from antenna 208 is weighted in weight circuit 261 and received signal from antenna 209 in weight circuit 263. The two weighted signals then are added in the receiver 218.

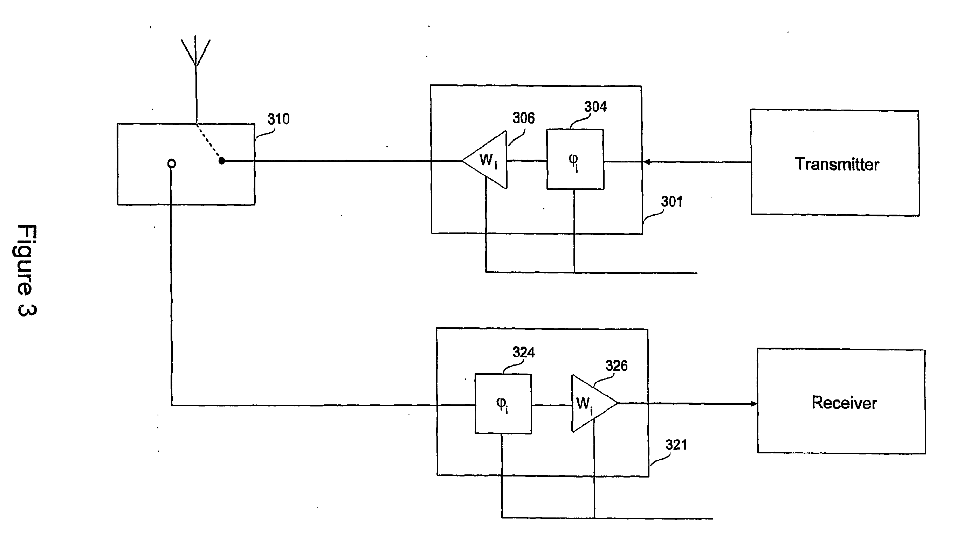

In Figure 3 one of the weight units 231-235 is shown more in detail. The weight unit 301 includes a phase displacement circuit 304 and a variable amplifier circuit 306. In certain preferred embodiments, the variable amplifier can be replaced by a circuit with fixed amplification. Other ways to adjust amplification and phase of the signals can be realized by an expert of the field. For instance, the signal level can be adjusted in a digital signal processor under software control and be fed out via a constant value amplifier.

Notice that only embodiment in principle is described. In a UMTS base station with multiple antennas it is more advisable to combine the different received antenna signals after the RAKE-receivers, connected to each antenna element, where the complex impulse response of the radio channels have already been estimated, which means that the signals from the multiple RAKE-receivers can be summed up in a simple way. This provides Optimum Combining for the different antenna signals. For transmission according to the described method, however, MRC-coefficients (MRC-coefficients optimal for constant noise, for instance thermal noise) is needed. These can in a simple way be calculated as below. With respective phase displacements one can multiply respective modulated signal by its coefficients (real coefficient + phase displacement = complex coefficient) in the transmitter to each antenna element. This multiplication can with advantage be introduced in the place where the power adjustment is introduced for the signals to the different mobile stations. That is, before the signals to the different mobile stations are summed up.

Notice that in the cases the time spread/dispersion is larger than the chip time (0,26 μs), that is for larger cells than micro cells, multiple complex MRC-coefficients for different relative delays must be used at multiplication for different relative delays at multiplication of the transmitted signal to each antenna element. That is, one has to implement a "RAKE-transmitter" for each antenna element. In the same way one has to before a GSM base station calculate multiple MRC-coefficients with different relative delays for each antenna element if the time spread/dispersion is larger than one bit-time (3,69 μs). The weight units at transmission are connected to a duplex unit which can be a switch. In this case the signals are controlled so that the switch 310 is awaiting and connects the transmitter weights 301 etc at transmission, and the receiver weights 321 etc at reception. The weight units receive signals from the control unit 226 in the case with communication device 202. The control unit calculates according to certain algorithms, which are described later, which amplification respective phase displacement each weight unit shall have to achieve good reception. In the following these calculation algorithms are described.

In the communication device 202 the control unit controls the value of amplitudes and phase displacements in the weight units 231, 233, 235 (transmission), and 250, 252, 254 (reception).

At reception according to one embodiment of the invention is proceeded as follows.

The voltage from each antenna element is phase compensated and weighted with signal voltage-/noise effect ratio and normalized. That is, the square sum of the weights are equal to the number of elements. The equations are in the literature called Maximal Ratio Combining.

$$<1>V_i \ = \ A_i \times e^{jx\varphi i} \quad i \ = \ 1 \ - \ N$$

$$<2>V_{MRC} \ = \ \sum W_i \ \times V_i \times e^{-jx\varphi i} = \frac{1}{k} \times \sum_i (A_i)^2$$

$$<3>W_i \ = \ A_i / k \ , \sum_i W_i^2 = N$$

$V_i$ =     the signal voltage from antenna element i  
$A_i$ =     the amplitude of the voltage from antenna element i  
$\varphi_i$ =     phase position/displacement of the voltage from antenna element i  
$V_{MRC}$ **=**     the voltage weighted together  
$W_i$ =     the weight of the voltage from antenna element i  
$k$ =     a constant  

In one embodiment of the invention are in communication device 202 weights $W_i$ calculated and at the same time is also the compensatory phase displacement $-\varphi_i$ measured and stored. The received signal is calculated as $V_{MRC}$.

In the transmission case has been arranged for the possibility to weight the signals to respective antenna element. In one preferred embodiment of the invention, $W_i$ and $-\varphi_i$ are used not only at the reception, but also at transmission according to the equation below.

$$<4>U_i \ = \ B \ \times \ W_i \ \times \ e^{-jx\varphi i}$$

$U_i$ =     the output voltage to antenna element i  
$B$ =     the amplitude of original output signal (before weight units and antennas)

$W_i$, $\varphi_i$ =    the same as above

At the communication device 201, which can be a mobile station, the control unit 226 controls the value of the amplitude and the phase displacement in the weight units 231 - 235 (transmission), respective 250 - 254 (reception).

In one preferred embodiment of the invention, amplitudes and phase displacement are achieved at reception in the mobile station according to the following.

The voltage at each antenna element is phase compensated and weighted with/by signal amplitude/interference effect (signal- to interference effect) at each element and is normalized, that is, the sum of the weights are equal to the number of elements according to the equations below

$$<5> V_i \ = \ A_i \times e^{jx\varphi i} \qquad i \ = \ 1 \ - \ N$$

$$<6> V_{OC} \ = \ \sum_i W_i \times V_I \times e^{-jx\varphi i} = \sum_I \frac{1}{k_i} \times \left(A_i\right)^2$$

$$<7>$$

$$W_i = \sum_i W_i^2 = N$$

$$W_i = \frac{A_i / S_i^2}{k}$$

The equations describe algorithms which can be summarized under the name Optimum Combining. In the equations above are

$V_i$ =    the voltage from antenna element i
$A_i$ =    the amplitude from antenna element i
$\varphi_i$ =    phase position/displacement of the voltage from antenna element i
$V_{oc}$ =    the voltage weighted together
$W_i$ =    the weight of the voltage from antenna element i
$k_i$ =    the constant for $W_i$
$S_i^2$ =    the effect of the interference from antenna element i (that is, both thermal noise and interference)

In one preferred embodiment of the invention, Maximum Ratio Combining and Optimum Combining are utilized at down link communication at the same time. The calculations and the signal flow can be realized in hardware alternatively as a software product for suitable processor and memory hardware.

In one embodiment the MRC-coefficients are obtained by complex correlation in the receiver of a known transmitted code reference with used modulation. The MRC-coefficients are in the UMTS-case obtained in a so called RAKE-receiver for W-CDMA. A RAKE-receiver is an MRC-receiver for one receiver antenna, where the diversity gain occurs by signal contributions with different delays being summed up. In UMTS it is also so that, due to the spread in frequency with corresponding "de-spread" in the RAKE-receiver, it will function in the same way in interference as in noise. That is, it will actually perform "optimum combining" if the major part of the interference consists of other radio signals and not thermal noise. Such a measuring of C/(I+N) is made all the time in the UMTS-receiver.

In one embodiment related to GSM, the known code sequence consists of 26 bit "teach/experience sequence" and is used for synchronization and for the so called VITERBI-equalizer, but is also used to calculate C/(I+N).

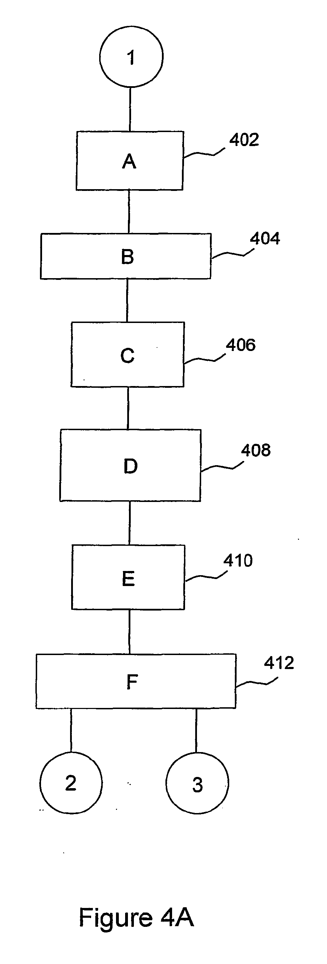

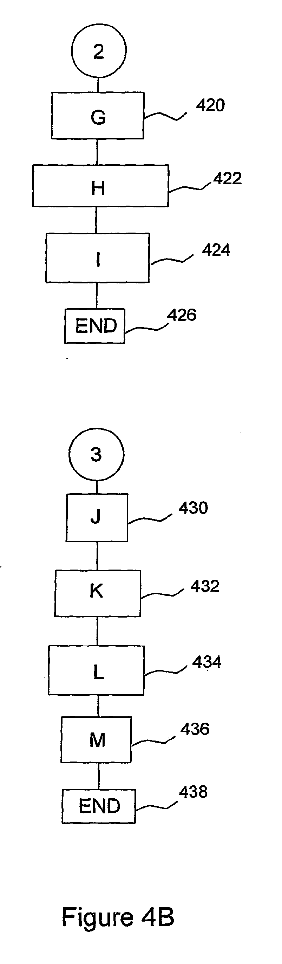

Below, the method is described with reference to the flow chart in Figure 4A and B.

Received noise effect/interference effect is measured 402 in connection with the RAKE-receiver in the UMTS-case, or at the VITERBI-equalizer in the GSM-case, as has been described above. For each antenna element voltage $V_i$, its phase position/displacement $\varphi_i$ is extracted 404. For each antenna element voltage $V_i$ also its amplitude $A_i$ is extracted 406. After that, the sum of the squares of the amplitudes are created 408. The factor k is determined 410 so that the sum of the squares of the amplitudes divided by k raised to the second power is equal to the number of antenna elements. The weights $W_i$ then are created 412 as respective amplitude $A_i$ divided by the factor k. Weights and phase displacements are now calculated and are used to combine the signals from the antenna elements i at reception and transmission.

At reception 420 received voltage $W_{MRC}$ is created 422 as the sum of the products of the voltage from each antenna element multiplied by respective weight $W_i$ and respective compensating phase displacement $e^{-j\varphi i}$.

At transmission from the antenna elements, there is for each antenna element *i* a voltage $A_i = V_i$ created 432, which is the product of the signal which shall be transmitted, designated B, the weight $W_i$ and the compensatory phase displacement $e^{-j\varphi i}$. The voltage $U_i$ then is fed 436 to respective antenna element.

**Claims**

1. A method for reducing disturbance in, and facilitating the installation of, a radio communication system comprising at least one stationary base station (202) and one mobile station (201), the stationary base station (202) including a plurality of antenna elements (206, 210, 212) for both diversity reception and transmission, which method comprises the steps of:

   ■ selecting reception coefficients for said plurality of antenna elements (206, 210, 212) at radio reception from the mobile station (201), the reception coefficients being varied depending on detected changes in received up-link radio signal from the mobile station (201), and
   ■ generating transmission coefficients by using the selected reception coefficients-as transmission coefficients, which transmission coefficients control respective antenna element (206, 210, 212) at radio transmission of downlink signals to the mobile station (201),

   **characterized in that** the stationary base station (202) and the mobile station (201) communicate with each other by means of W-CDMA technology, and by the steps of:

   ■ providing the mobile station (201) with at least two antenna elements (208, 209), and
   ■ performing, by way of the antenna elements (208, 209) of the mobile station (201), diversity reception of the down-link signals from the base station (202).

2. A method as claimed in claim 1, **characterized in that** said base station (202) derives/finds reception coefficients and performs said diversity reception according to Optimum Combining.

3. A method as claimed in claim 1, **characterized in that** said base station (202) derives/finds reception coefficients according to Maximal Ratio Combining and uses these reception coefficients as transmission coefficients at transmission to said mobile station (201).

4. A method as claimed in claim 1, **characterized in that** said mobile station (201) combines the antenna signals at said diversity reception with so called Optimum Combining.

5. A cellular radio communication system, comprising at least one base station (202) and one mobile station (201), which base station (202) comprises a plurality of antenna elements (206, 210, 212) for both diversity reception and transmission, means (250, 252, 254) for generating weight coefficients to said antenna elements (206, 210, 212) at reception of up-link signals from the mobile station (201), and means (231, 233, 235) for applying the at reception generated weight coefficients to said antenna elements (206, 210, 212) at transmission of down-link signals to the mobile station (201), **characterized in that** the base station (202) and the mobile station (201) are arranged to communicate with each other by means of W-CDMA technology, and **in that** the mobile station (201) comprises at least two antenna elements (208, 209) for diversity reception, means (261, 263) for generating weight coefficients to the antenna elements (208, 209) of the mobile station at reception of down-link signals from the base station, and means (261, 263) for applying said weight coefficients to the antenna elements (208, 209) of the mobile station (201) at reception.

**Patentansprüche**

1. Verfahren zum Verringern von Störungen in und zum Erleichtern der Installation von einem Funkkommunikationssystem, das wenigstens eine stationäre Basisstation (202) und eine mobile Station (201) aufweist, wobei die stationäre Basisstation (202) eine Mehrzahl von Antennenelementen (206, 210, 212) sowohl für Diversity-Empfang als auch zum Senden aufweist, welches Verfahren die Schritte aufweist:

- Empfangskoeffizienten für die Mehrzahl von Antennenelementen (206, 210, 212) bei Funkempfang von der mobilen Station (201) auszuwählen, wobei die Empfangskoeffizienten in Abhängigkeit von festgestellten Veränderungen in dem empfangenden Aufwärtsverbindungsfunksignal von der mobilen Station (201) geändert werden und

- Sendungskoeffizienten unter Verwendung der ausgewählten Empfangskoeffizienten als Sendungskoeffizienten zu erzeugen, welche Sendungskoeffizienten entsprechendes Antennenelement (206, 210, 212) bei der Funksendung von Abwärtsverbindungssignalen zur mobilen Station (201) steuern,

**dadurch gekennzeichnet**, das die stationäre Basisstation (202) und die mobile Station (201) miteinander mit Hilfe von W-CDMA Technik kommunizieren, und durch die Schritte:

- die mobile Station (201) mit wenigstens zwei Antennenelementen (208, 209) zu versehen und
- mit Hilfe der Antennenelemente (208, 209) der mobilen Station (201) Diversity-Empfang der Abwärtsverbindungssignale von der Basisstation (202) durchzuführen.

**2.** Verfahren nach Anspruch 1, **dadurch gekennzeichnet, dass** die Basisstation (202) Empfangskoeffizienten ableitet/findet und Diversity-Empfang gemäß Optimalem Kombinieren durchführt,

**3.** Verfahren nach Anspruch 1, **dadurch gekennzeichnet**, das die Basisstation (202) Empfangskoeffizienten gemäß dem Maximalen Verhältnis Kombinieren ableitet/findet und diese Empfangskoeffizienten als Sendungskoeffizienten bei der Sendung zu der mobilen station (201) verwendet.

**4.** Verfahren nach Anspruch 1, **dadurch gekennzeichnet**, das die mobile Station (201) die Antennensignale bei dem Diversity-Empfang mit sogenanntem Optimalem Kombinieren kombiniert.

**5.** Zellulares Funkkommunikationssystem, das wenigstens eine Basisstation (202) und eine mobile Station (201) aufweist, welche Basisstation (202) eine Mehrzahl von Antennenelementen (206, 210, 212) für sowohl Diversity-Empfang als auch zum Senden, Mittel (250, 252, 254) zum Erzeugen von Gewichtskoeffizienten zu den Antennenelementen (206, 210, 212) bei Empfang von Aufwärtsverbindungssignalen von der mobilen Station (201) und Mittel (231, 233, 235) zum Anwenden der bei Empfang erzeugen auf die Antennenelemente (206, 210, 212) bei Sendung der Abwärtsverbindungssignale zu der mobilen Station (201) aufweist, **dadurch gekennzeichnet**e dass die Basisstation (202) und die mobile Station (201) dazu ausgebildet sind, miteinander mit Hilfe von W-CDMA Technik zu kommunizieren und das die mobile Station (201) wenigstens zwei Antennenelemente (208, 209) für Diversity-Empfang, Mittel (261, 263) zum Erzeugen von Gewichtskoeffizienten zu den Antennenelementen (208, 209) der mobilen Station bei Empfang von Abwärtsverbindungssignalen von der Basisstation und Mittel (261, 263) zum Anwendet der Gewichtskoeffizienten auf die Antennenelemente (208, 209) der mobilen Station (201) bei Empfang aufweist.

**Revendications**

**1.** Procédé de réduction de perturbations sur un système de radiocommunication, comprenant au moins une station de base fixe (202) et une station mobile (201), et destiné à faciliter l'installation de ce dernier, la station de base fixe (202) comportant une pluralité d'éléments d'antenne (206, 210, 212) à la fois afin d'assurer la réception et l'émission par diversité, lequel procédé comprend les étapes de :

sélection de coefficients de réception pour ladite pluralité d'éléments d'antenne (206, 210, 212) lors de la réception radio à partir de la station mobile (201), les coefficients de réception étant modifiés en fonction de variations sur le signal radio de liaison montante reçu à partir de la station mobile (201), et
production de coefficients d'émission en utilisant les coefficients de réception sélectionnés en tant que coefficients d'émission, lesquels coefficients d'émission commandant l'élément d'antenne respectif (206, 210, 212) lors de l'émission radio de signaux de liaison descendante vers la station mobile (201),

**caractérisé en ce que** la station de base fixe (202) et la station mobile (201) communiquent l'une avec l'autre au moyen de la technologie W-CDMA, et par les étapes de :

agencement de la station mobile (201) avec au moins deux éléments d'antenne (208, 209), et
exécution, au moyen des éléments d'antenne (208, 209) de la station mobile (201), d'une réception par diversité des signaux de liaison descendante à partir de la station de base(202).

2.  Procédé selon la revendication 1, **caractérise en ce que** ladite station de base (202) déduit/recherche des coefficients de réception et exécute ladite réception par diversité selon une association optimum.

3.  Procédé la revendication 1, **caractérisé en ce que** ladite station de base (202) déduit/recherche des coefficients de réception selon une association à rapport maximum et utilise ces coefficients de réception en tant que coefficients d'émission lors de l'émission vers ladite station mobile (201).

4.  Procédé selon la revendication 1, **caractérisé en ce que** ladite station mobile (201) associe les signaux d'antenne lors de ladite réception par diversité avec ce que l'on appelle une association optimum.

5.  Système de radiocommunication cellulaire, comprenant au moins une station de base (202) et une station mobile (201), laquelle la station de base (202) comprend une pluralité d'éléments d'antenne (206, 210, 212) à la fois pour la réception et par diversité, des moyens (250, 252, 254) destinés à produire des coefficients de pondération pour lesdits éléments d'antenne (206, 210, 212) lors de la réception de signaux de liaison montante à partir de la station mobile (201), et des moyens (231, 233, 235) destinés à appliquer les coefficients de pondération produits lors la réception sur lesdits éléments d'antenne (206, 210, 212) lors de l'émission de signaux de liaison descendante vers la station mobile (201), **caractérisé en ce que** ladite station de base (202) et la station mobile (201) sont agencées de manière à communiquer l'une avec l'autre au moyen de la technologie W-CDMA, et **en ce que** la station mobile (201) comprend au moins deux éléments d'antenne (208, 209) afin d'assurer la réception par diversité; des moyens (261, 263) destinés à produire des coefficients de pondération pour les éléments pantenne (208, 209) de la station mobile lors de la réception de signaux de liaison descendante à partir de la station de base, et des moyens (261, 263) destinés à appliquer lesdits coefficients de pondération sur les éléments d'antenne (208, 209) de la station mobile (201) lors de la réception.

104

uplink

downlink

103

101

102

## Figure 1

## PRIOR ART

Figure 2

Figure 3

```
        ( 1 )
          |
      ┌────────┐
      │   A    │ ── 402
      └────────┘
          |
   ┌──────────────┐
   │      B       │ ── 404
   └──────────────┘
          |
      ┌────────┐
      │   C    │ ── 406
      └────────┘
          |
   ┌──────────────┐
   │      D       │ ── 408
   └──────────────┘
          |
      ┌────────┐
      │   E    │ ── 410
      └────────┘
          |
   ┌──────────────┐
   │      F       │ ── 412
   └──────────────┘
      |        |
    ( 2 )    ( 3 )
```

## Figure 4A

Figure 4B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0807989 A
- US 6173014 A
- WO 9939454 A1
- US 6167039 A
- WO 0079702 A1
- SE 516105 C2
- WO 0077951 A

**Non-patent literature cited in the description**

- **M. SAWAHASHI.** Experiments on Adaptive Antenna Array Diversity Transceiver for Base Station Application in W-CDMA Mobile Radio. *IEEE Antennas and Propagation Society International Symposium,* July 2000, vol. 2, ISBN 0-7803-6369-8, 578-582